# FASCICULE DE BREVET EUROPEEN

(11) **EP 1 012 483 B1**
(45) Date de publication et mention de la délivrance du brevet: **27.08.2003**
(21) Numéro de dépôt: 99932913.9
(22) Date de dépôt: 19.07.1999
(51) Int. Cl.: F16B 9/02

(54) **AGENCEMENT POUR LA FIXATION D'UN ELEMENT TUBULAIRE SUR UN ELEMENT DE STRUCTURE DE CAISSE D'UN VEHICULE AUTOMOBILE**
ANORDNUNG ZUM BEFESTIGEN EINES ROHRFÖRMIGEN ELEMENTS AUF EINEM TEIL DER STRUKTUR EINER KRAFTFAHRZEUGKAROSSERIE
ARRANGEMENT FOR FIXING A TUBULAR ELEMENT ON A STRUCTURAL ELEMENT OF A MOTOR VEHICLE BODY

(30) Priorité: 20.07.1998 FR 9809207
(43) Date de publication de la demande: 28.06.2000
(73) Titulaire: VALEO EMBRAYAGES s.a.s., 80009 Amiens Cedex 1 (FR)
(72) Inventeur: BONARDO, Sandro, F-93585 Saint-Ouen (FR); REY, Frédéric, F-75011 Paris (FR); VILLATA, Gino, F-93585 Saint-Ouen (FR)
(74) Mandataire: Lemaire, Marc
(86) Numéro de dépôt international: FR9901766
(87) Numéro de publication internationale: WO00005508

(56) Documents cités:
- EP-A- 0 616 139
- FR-A- 1 253 895
- GB-A- 1 509 287

## Description

L'invention concerne un agencement pour la fixation, sur un élément de structure de caisse d'un véhicule automobile, d'un cylindre de commande hydraulique.

L'invention concerne plus précisément un agencement pour la fixation, sur un élément de structure de caisse d'un véhicule automobile, d'un cylindre de commande hydraulique de forme générale axiale tubulaire, notamment de commande d'un embrayage ou de freins du véhicule, du type dans lequel le cylindre de commande est mobile entre une position de montage dans l'élément de structure de caisse du véhicule, et une position de verrouillage par rapport à l'élément de structure de caisse du véhicule dans laquelle il est immobilisé par rapport à l'élément de structure de caisse du véhicule par des moyens d'immobilisation, du type dans lequel des moyens d'immobilisation en translation suivant l'axe du cylindre comportent, d'avant en arrière, une surface d'appui qui s'étend transversalement à partir d'un corps principal du cylindre, des moyens élastiques axiaux, une paroi solidaire de l'élément de structure de caisse qui est percée d'un orifice, et au moins une oreille, qui s'étend transversalement à partir du corps principal, qui, au montage, traverse une découpe complémentaire s'étendant radialement à partir de l'orifice, l'oreille permettant l'immobilisation en translation du corps par rapport à la caisse lorsqu'une rotation du corps autour de son axe l'amène de sa position de montage à sa position de verrouillage et réalise le pincement de la paroi entre la surface d'appui, les moyens élastiques et l'oreille.

On connaît de nombreux exemples d'agencements pour la fixation d'un cylindre de commande hydraulique de forme générale axiale tubulaire sur un élément de structure de caisse d'un véhicule automobile.

On connaît tout d'abord des agencements conventionnels, dans lesquels le cylindre de commande est fixé directement sur un tablier du véhicule, par exemple par des goujons, des vis ou des écrous.

Les agencements de ce type présentent l'avantage d'utiliser des cylindres de commande de forme simple, donc de réalisation moulée peu onéreuse.

Toutefois, ces montages sont contraignants, le montage d'un cylindre de commande du type précédemment cité nécessitant une bonne coaxialité des points d'ancrage du cylindre de commande et des trous du tablier.

Pour résoudre cet inconvénient, on a imaginé des montages du type précédemment décrit, souvent appelés montages "à baïonnette", qui permettent un montage ou un démontage rapide du cylindre de commande dans l'élément de structure de caisse du véhicule, notamment le tablier du véhicule.

Le document GB-A-2.163.475 décrit un agencement de ce type dans lequel le cylindre de commande comporte trois oreilles qui réalisent simultanément l'immobilisation en translation et l'immobilisation en rotation du cylindre de commande.

A cet effet, le cylindre de commande comporte une goupille élastique en "U", qui est enfilée radialement sur deux lamages parallèles du corps du cylindre, qui est en appui sur une face avant du support et en appui sur une face arrière d'une collerette radiale du corps du cylindre de commande. Le cylindre de commande comporte par ailleurs trois oreilles réparties uniformément angulairement, dont des faces avant comportent des dents qui sont destinées à coopérer avec des crans d'une face arrière du support, lorsque la goupille élastique sollicite axialement le corps du cylindre de commande.

Cet agencement présente l'inconvénient de nécessiter une mise en position angulaire adéquate des dents du cylindre en face des crans du support, ce qui rend le montage délicat.

De plus, la forme particulière des oreilles, nécessite un moule de forme particulièrement complexe et un procédé de moulage coûteux, l'état de surface des dents étant nécessaire à une bonne mise en position du cylindre de commande par rapport au tablier du véhicule.

Pour remédier à cet inconvénient, l'invention propose un agencement comprenant les caractéristiques de la revendication 1.

Dans ce but, l'invention est caractérisé en ce que des moyens d'immobilisation en rotation du corps par rapport à la paroi comportent une coupelle, qui est liée en rotation au corps, qui est interposée entre les moyens élastiques axiaux et la paroi, et qui comporte au moins un ergot qui s'étend axialement au travers de l'orifice de la paroi pour venir en butée contre la paroi lorsque le corps est amené en rotation de sa position de montage à sa position de verrouillage, et comportent au moins une dent, solidaire en rotation du corps, qui s'étend axialement au bord du corps pour mordre la paroi lorsque le corps est amené en rotation de sa position de montage à sa position de verrouillage, et pour immobiliser le corps en position de verrouillage.

Selon d'autres modes de réalisation de l'invention:
- le corps comporte sur sa périphérie au moins une oreille, qui est associée à une découpe complémentaire de l'orifice,
- la coupelle est de forme générale cylindrique, et comporte une paroi transversale arrière, qui comporte un orifice circulaire et une découpe, identique à celle du corps, pour permettre son montage sur le corps,
- la coupelle comporte une arête rectiligne qui est agencée tangentiellement au bord de son orifice circulaire, et qui est destinée à coopérer avec un méplat complémentaire, agencé sur la périphérie du corps, pour lier en rotation la coupelle au corps,
- l'ergot est agencé sur une face arrière de la paroi transversale arrière de la coupelle, au bord d'une arête sensiblement radiale de la découpe,
- la coupelle est réalisée par moulage d'un matériau plastique,
- la coupelle est réalisée par emboutissage d'une tôle,
- l'ergot est formé d'un repli axial de la tôle de la coupelle et est orienté vers l'arrière,
- la dent s'étend à partir d'une face avant de l'oreille du corps,
- la dent est portée par la face arrière de la paroi transversale arrière de la coupelle,
- la dent est formée d'un repli axial de la tôle de la coupelle, qui est agencé au bord de la découpe, et qui est orienté vers l'arrière,
- la surface d'appui du corps fait partie d'une collerette annulaire radiale,
- les moyens élastiques comportent une rondelle élastique qui prend appui sur une face arrière de la collerette et sur une face intérieure avant de la coupelle,
- la coupelle est susceptible de coulisser sur le corps entre deux positions extrêmes, une première position avant dans laquelle la face intérieure avant de la coupelle est sollicitée par la rondelle élastique, et une seconde position de butée arrière dans laquelle un bourrelet radial, qui est porté par une paroi intérieure de la coupelle s'étend en direction de l'axe du cylindre pour immobiliser la coupelle en emboîtement sur la collerette,
- la paroi est portée par un support qui est agencé en regard d'une ouverture pratiquée dans l'élément de structure de caisse, et comporte deux pattes percées à leurs extrémités, qui permettent le montage du support sur l'élément de structure de caisse par vissage,
- le corps comporte sur sa périphérie au moins deux oreilles de formes différentes et uniformément réparties, qui sont associées à au moins deux découpes complémentaires de l'orifice, pour permettre une indexation angulaire du corps lors de son introduction dans l'orifice,
- l'arête rectiligne relie entre elles deux découpes consécutives dans leur zone de jonction avec l'orifice.

D'autres caractéristiques et avantages de l'invention apparaîtront à la lecture de la description détaillée qui suit pour la compréhension de laquelle on se reportera aux dessins annexés dans lesquels :
- La figure 1 est une vue en perspective éclatée d'un agencement selon l'invention ;
- la figure 2 est une vue de côté d'un agencement selon la figure 1 représenté assemblé ;
- la figure 3 est une vue en bout des découpes de l'orifice du support selon l'invention ;
- la figure 4 est une vue en bout d'une coupelle selon l'invention ;
- la figure 5 est une vue en bout d'un cylindre de commande selon l'invention ;
- la figure 6 est une vue en bout illustrant un cylindre de commande selon l'invention avant son engagement à travers l'orifice ;
- la figure 7 est une vue en bout illustrant un cylindre de commande selon l'invention pendant son engagement dans l'orifice ;
- la figure 8 est une vue en bout illustrant un cylindre de commande selon l'invention après son engagement dans l'orifice et après sa rotation ;
- la figure 9 est une vue en perspective d'une rondelle élastique ondulée pour un second mode de réalisation du cylindre de commande selon l'invention ;
- la figure 10 est une vue en perspective d'une rondelle élastique en fil cambré et fendu pour le premier mode de réalisation du cylindre de commande selon l'invention ;
- la figure 11 est une vue en perspective d'une rondelle élastique en matériau élastomère pour le premier mode de réalisation du cylindre de commande selon l'invention ;
- la figure 12 est une vue en perspective d'une rondelle élastique fendue pour le premier mode de réalisation du cylindre de commande selon l'invention ;
- la figure 13 est une vue en perspective d'une coupelle en matériau plastique pour le second mode de réalisation du cylindre de commande selon l'invention ;
- la figure 14 est une vue de détail en coupe axiale illustrant le montage du cylindre de commande selon le second mode de réalisation de l'invention.

Dans la description qui va suivre, des chiffres de référence identiques désignent des pièces identiques ou ayant des fonctions similaires.

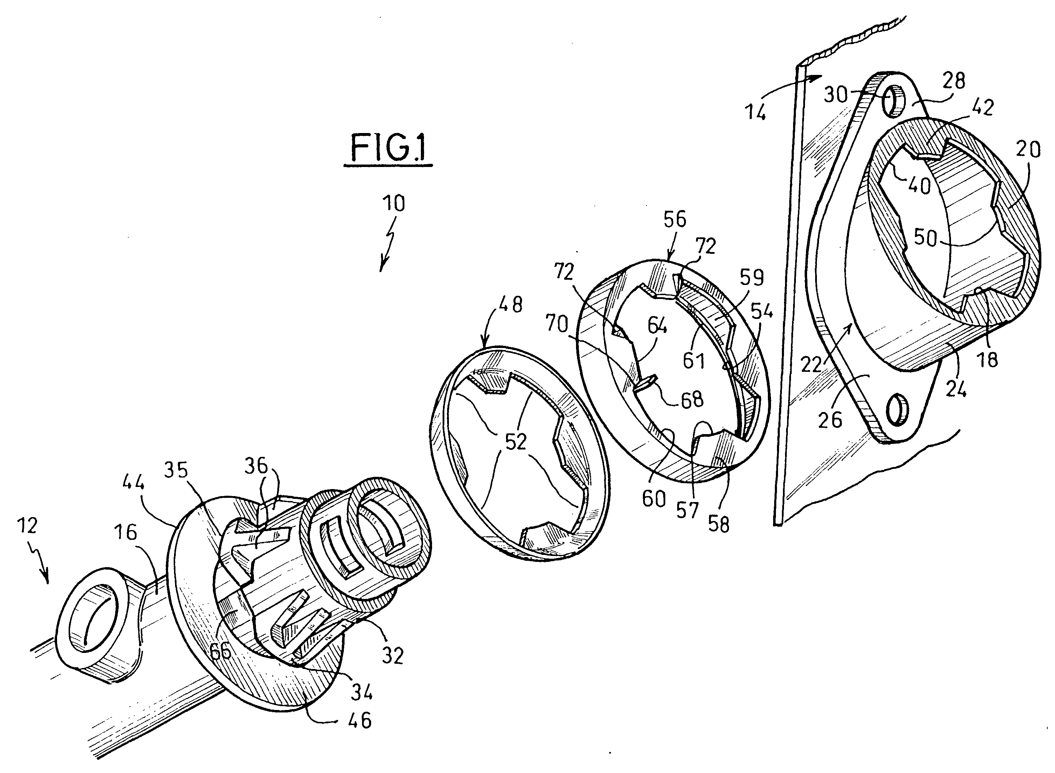

On voit sur la figure 1 l'ensemble d'un agencement 10 pour la fixation d'un cylindre de commande hydraulique 12 sur un élément de structure de caisse 14, notamment un tablier, d'un véhicule automobile (non représenté). L'élément 14 est fixe.

De manière connue, le cylindre de commande 12 comporte un corps 16 de forme générale axiale tubulaire réalisé par exemple par moulage d'un matériau métallique ou plastique.

De manière connue, le corps 16 du cylindre de commande 12 est destiné à être monté à travers un orifice 18 d'une paroi 20 qui est solidaire de l'élément de structure de caisse 14 du véhicule. La paroi 20 peut être venue de matière avec l'élément 14 de structure de caisse, comme c'est le cas par exemple lorsque la paroi 20 fait partie d'un tablier du véhicule.

Toutefois, dans le mode de réalisation préféré de l'invention, la paroi 20 appartient à un support 22 qui est fixé sur l'élément 14 de structure de caisse du véhicule.

A cet effet, le support 22 comporte un corps 24 sensiblement cylindrique qui est destiné à recevoir le cylindre de commande 12, et une embase plane 26, qui comporte deux pattes 28 percées chacune à leur extrémité de trous axiaux 30 destinés à permettre le passage de vis (non représentées) pour la fixation sur le tablier 14 du véhicule.

Le cylindre 12 est mobile entre une position de montage dans le support 22, et une position de verrouillage dans le support 22.

De manière connue, le corps 16 du cylindre 12 comporte à son extrémité arrière 32 au moins une oreille transversale 34 qui est destinée, comme on le verra ultérieurement, à permettre la fixation du cylindre de commande 12 dans le support 22. Dans le mode de réalisation préféré de l'invention, et de façon non limitative de l'invention, le corps 16 comporte quatre oreilles 34, réparties angulairement de façon régulière, et qui sont venues de matière avec le cylindre 12. Une bonne tenue mécanique des oreilles 34 par rapport au corps 16 en matière moulable est avantageusement assurée par des nervures 36 qui s'étendent entre des faces arrière 38 des oreilles 34 et la périphérie du corps 16. Les oreilles 34 et leurs nervures 36 sont aussi représentées à la figure 5, qui illustre le corps 16 du cylindre 12 ici à base de matière plastique renforcée par des fibres.

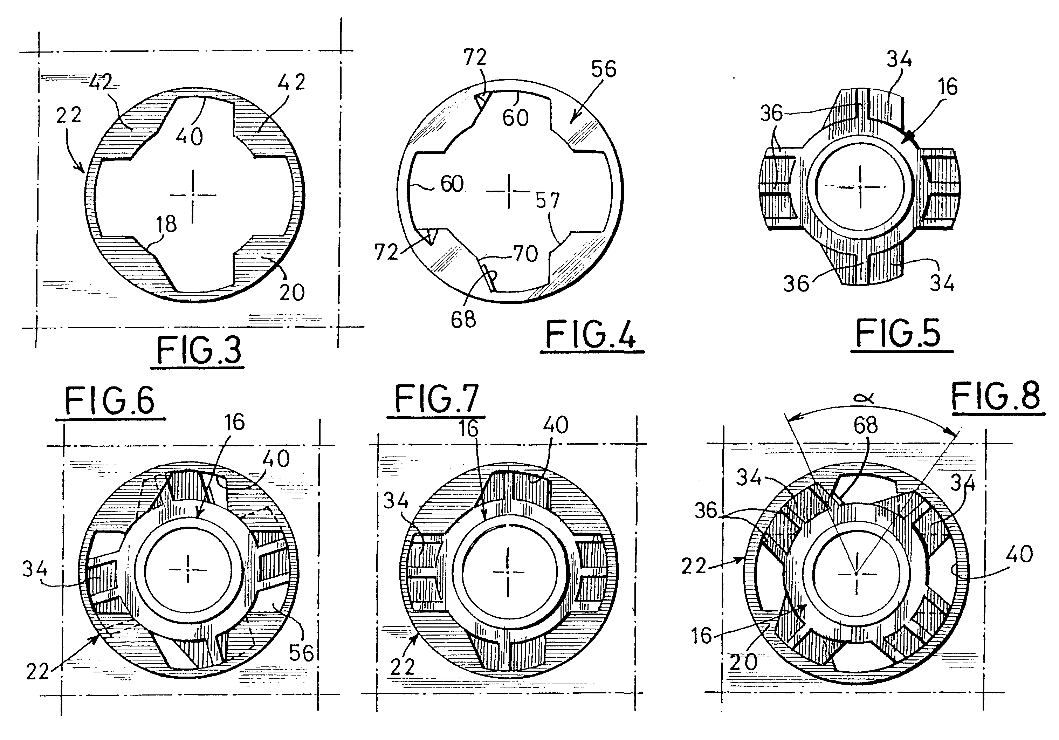

Lors du montage, le cylindre 12 est d'abord engagé d'avant en arrière de telle sorte que les oreilles 34 traversent des découpes 40 de l'orifice 18, qui sont de forme complémentaire des oreilles 34. L'orifice 18, agrandi par les découpes 40, présente donc sensiblement la forme d'une étoile à quatre branches. Avantageusement, comme il est représenté sur les figures 1 et 5, les oreilles 34 sont chacune différentes les unes des autres, et il en est de même des découpes 40 associées du support 22, visibles à la figure 3. Cette disposition induit, lors du montage, un seule orientation angulaire possible du cylindre 12 par rapport au support 22, ce qui est particulièrement avantageux pour le positionnement des branchements qui sont susceptibles d'être effectués sur le cylindre 12 lors de la suite de l'assemblage du véhicule. En effet, le cylindre 12 étant destiné à être connecté à différentes canalisations hydrauliques du véhicule, la définition de sa position angulaire au montage doit être clairement définie pour qu'un raccordement correct des canalisations puisse être effectué.

Lors du montage, le corps 16 et les oreilles 34 traversent d'avant en arrière les découpes 40 de l'orifice 18, puis le corps 16 est pivoté autour de son axe d'environ un huitième de tour. Le corps 16 est rappelé élastiquement vers l'arrière, si bien qu'après cette rotation du corps 16, les oreilles viennent en appui par l'intermédiaire de leurs faces avant 35 sur des retours de matière 42 agencés sur le support 22 entre les découpes 40 de l'orifice 18.

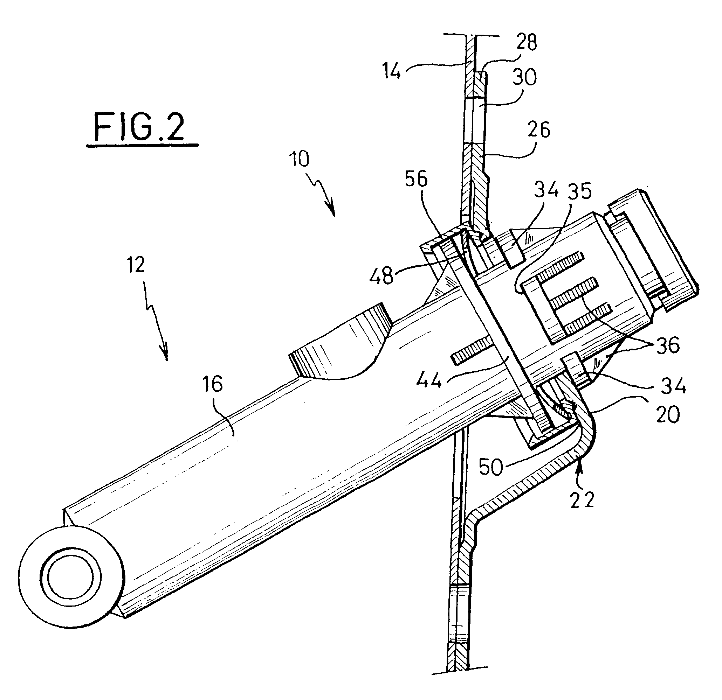

Dans ce but, le corps comporte une collerette 44, qui s'étend radialement à l'avant des oreilles 34, et qui est d'un diamètre supérieur à l'encombrement radial des oreilles 34, de sorte qu'elle peut fournir une surface d'appui, formée par une face arrière 46, à une rondelle élastique 48, qui est interposée avant le montage entre la collerette 44 et le support 22, qui est aussi représentée à la figure 2.

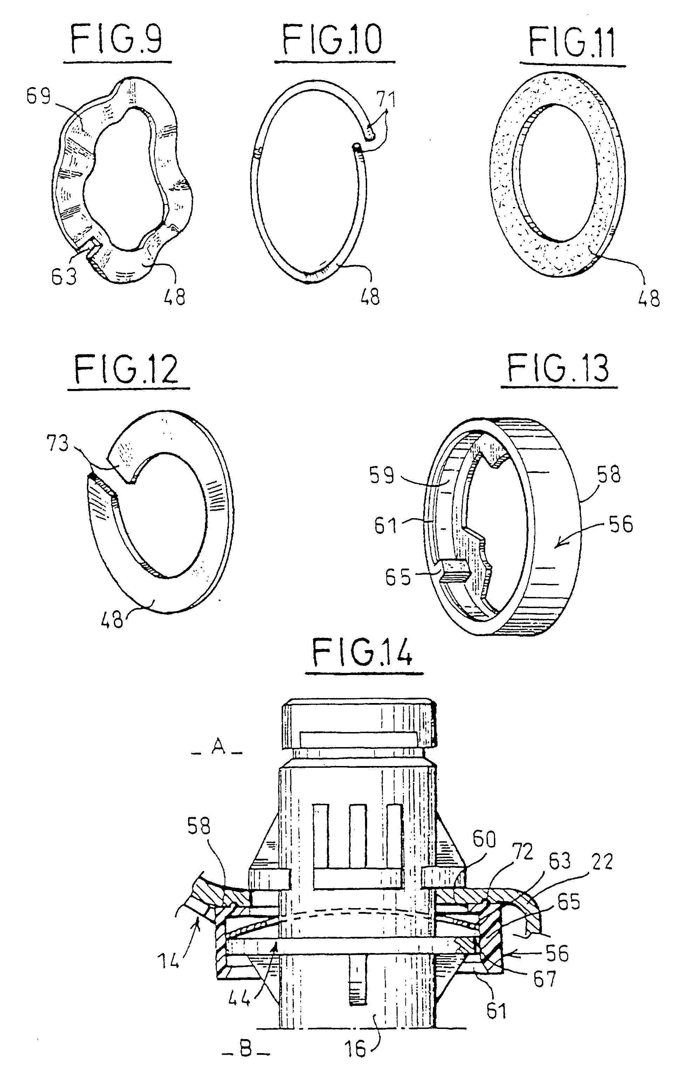

La rondelle élastique 48 comporte quatre découpes 52 complémentaires des oreilles 34, pour lui permettre de venir en appui sur la face arrière 46 de la collerette 44 après avoir été traversée par les oreilles 34 du corps 16. Avantageusement, la rondelle 48 est une rondelle élastique conique de type "Belleville", représentée à la figure 1, mais peut aussi être une rondelle élastique ondulée de type "Onduflex", représentée à la figure 9, une rondelle en fil cambré et fendu, représentée à la figure 10, une rondelle en matériau élastomère, représentée à la figure 11, ou encore une rondelle fendue, représentée à la figure 12. Le détail de ces rondelles sera décrit ultérieurement.

Lorsque le cylindre 12 est amené en position de montage, la rondelle 48 est comprimée entre la face arrière 46 de la collerette 44 et une face arrière 54 d'une coupelle 56 qui est interposée entre la rondelle 48 et le support 22.

La coupelle 56 est une coupelle en tôle emboutie ou en matériau plastique, de forme sensiblement cylindrique, dont une paroi transversale arrière 58 comporte aussi un orifice circulaire 59 et quatre découpes 60, et qui est destinée à être enfilée axialement sur le corps 16 du cylindre 12 et sur la rondelle 48. La coupelle 56 est représentée aux figures 1 et 4. La coupelle 56 est d'un diamètre supérieur à celui de la rondelle 48, si bien que lorsque la rondelle 48 et la coupelle 56 sont enfilées axialement d'arrière en avant sur le corps 16 du cylindre 12, la rondelle 48 est reçue dans la coupelle 56.

La coupelle 56 est d'un diamètre intérieur sensiblement égal au diamètre extérieur de la collerette 44 du corps 16 et comporte sur sa paroi intérieure 59 un bourrelet 61, qui s'étend radialement vers l'intérieur, pour permettre à la coupelle 56 de s'emboîter sur la collerette 44. De la sorte, la coupelle 56 est susceptible de se déplacer axialement par rapport au corps 16 entre deux positions de butée axiale, une position avant dans laquelle sa face arrière 54 est en butée contre la rondelle 48 lorsqu'elle est comprimée, et une position arrière dans laquelle le bourrelet 61 retient la coupelle sur la collerette 44, la rondelle 48 étant détendue.

Lors du montage, le corps 16, muni de la rondelle élastique 48 et de la coupelle 56, représentés à la figure 1, est présenté en face des découpes 40 du support 22 puis introduit d'avant en arrière dans le support 22. La figure 6 illustre une position non conforme du corps 16 par rapport aux découpes 40 qui interdit son montage dans le support 22. Une position correcte d'introduction est représentée à la figure 7. La coupelle 56 vient en appui contre la face arrière 50 du support 22, représentée à la figure 1, et comprime la rondelle élastique 48. Une rotation du corps 16 permet de l'amener de sa position de montage à sa position de verrouillage axial, dans laquelle les faces avant 35 des oreilles 34 sont en appui sur la face arrière de la paroi transversale 20 du support 22, sous l'action de l'effort de rappel exercé par la rondelle élastique 48 sur la collerette 44 du corps 16, qui est retenue par la coupelle 56.

Cette configuration en verrouillage axial est plus particulièrement décrite en référence à la figure 2. La figure 8 illustre dans le détail le positionnement angulaire des oreilles 34 du corps 16 sur la face arrière transversale de la paroi 20, entre deux découpes 40 du support 22.

Le maintien axial du cylindre 12 dans le support 22 est assuré tant que les oreilles 34 occupent une position angulaire adéquate, chacune d'elles étant positionnée entre deux découpes 40 du support 22. La détermination de cette position étant particulièrement importante, l'agencement 10 comporte à cet effet des moyens d'immobilisation en rotation du corps 16 par rapport au support 22.

Conformément à un mode de réalisation préféré de l'invention, la coupelle 56 est liée en rotation par rapport au corps 16 du cylindre 12. Comme on peut le voir aux figures 1 et 4, une arête rectiligne supplémentaire 64 relie deux découpes 60 de la coupelle 56, sensiblement selon une tangente à l'orifice circulaire 57. Le corps 16 comporte un méplat 66, qui est agencé entre les deux oreilles 34 complémentaires des découpes 60 considérées de la coupelle 56, de sorte que lorsque la coupelle 56 est enfilée axialement sur le corps 16, l'arête 64 est en contact linéaire avec le méplat 66. La coupelle 56 est ainsi liée en rotation au corps 16.

Avantageusement, le méplat 66 du corps 16 est une forme issue directement du processus de moulage du cylindre 12. Par ailleurs, la réalisation du méplat 66 dans le corps 16 correspondant à une réduction du diamètre du corps cylindrique 16 dans le plan transversal associé, cette disposition permet de se dispenser de réaliser des arêtes rectilignes similaires dans la rondelle élastique 48 et dans le support 22, ce qui permet de simplifier les formes des ces dernières pièces, et donc d'abaisser leur coût de fabrication.

La coupelle 56 comporte, sur sa face arrière 58, un ergot axial 68, qui est décrit en référence aux figures 1 et 4. L'ergot axial 68 s'étend vers l'arrière et est agencé sur un bord radial 70 d'une découpe 60. L'ergot axial 68 est légèrement décalé angulairement vers l'intérieur de la découpe 60 considérée, de sorte qu'il est susceptible, lorsque le corps 16 muni de la rondelle 48 et de la coupelle 56 est introduit dans le support 22, de traverser l'orifice 18 du support 22. L'ergot axial 68 est agencé sur un bord 70 de la découpe 60 qui est choisi pour, entre la position de montage et la position de verrouillage, parcourir une largeur entière d'une découpe 40 du support 22 sans rencontrer la paroi 20 du support 22, de sorte qu'il permet de définir une course angulaire en rotation du cylindre 12 correspondant à un écart angulaire α entre deux bords d'une même découpe 60, l'ergot axial 68 venant en butée contre un bord radial la découpe 40 de la paroi 20 du support 22 en fin de course angulaire du cylindre 12. Cette course α est particulièrement représentée à la figure 8, le sens de rotation du cylindre 12 étant illustré par la flèche.

Le cylindre 12 comporte des moyens supplémentaires d'immobilisation en rotation, qui permettent au corps 16 de conserver sa position de butée angulaire contre le support 22. En effet, dans le mode de réalisation préféré de l'invention, la coupelle 56 comporte des dents 72 portées par sa face arrière 58. Les dents 72 sont représentées aux figures 1 et 4. Les dents 72 s'étendent axialement vers l'arrière pour mordre la face avant 50 du support 22 et empêcher la rotation du cylindre 12 dans le sens inverse du verrouillage. Avantageusement, dans le mode de réalisation préféré de l'invention, les dents 72 sont réalisées par pliage de la tôle dans laquelle la coupelle 56 est réalisée, et pour cette raison sont de préférence agencées au bord d'une ou plusieurs découpes 60. Avantageusement, les dents 72 forment un angle aigu (non représenté) avec la face arrière 58 de la coupelle 56, le sommet de cet angle étant tourné dans le sens de rotation de verrouillage du cylindre, pour favoriser le verrouillage et empêcher un déverrouillage accidentel.

En variante (non représentée) les dents 72 peuvent être portées d'une façon analogue par les faces avant 35 des oreilles 34 du corps 16. Dans ce cas, les dents 72 sont venues de matière avec le matériau du cylindre 12.

Toutefois, toutes ces dispositions ne sont pas restrictives de l'invention.

La coupelle 56 peut être réalisée en matériau plastique, et dans cette configuration toutes les formes fonctionnelles de la coupelle 56 sont obtenues par moulage. La figure 13 illustre une coupelle 56 réalisée par moulage selon un second mode de réalisation de l'invention. D'une façon analogue au mode de réalisation précédent, la coupelle 56 porte les dents, l'ergot et les découpes (non représentées) sur sa face arrière 58, et le bourrelet 61 permettant au montage, comme il est représenté à la figure 14, son immobilisation axiale par rapport à la collerette 44 du corps 16 du cylindre 12. Les dents 72 sont, suivant ce second mode de réalisation de l'invention, réalisées venues de matière avec le matériau plastique de la coupelle 56, et disposées par exemple sur la face arrière 58 de la coupelle 56 entre deux découpes 60, ou, en variante (non représentée) sur la périphérie de la face arrière 58.

Les figures 13 et 14 illustrent aussi un mode de réalisation en variante de la liaison en rotation de la coupelle 56 au corps 16. En effet, dans ce cas, la coupelle 56 ne comporte pas d'arête 64, le corps 16 ne comporte pas de méplat 66, et la liaison en rotation du corps 16 et de la coupelle 56 est être réalisée avantageusement par un toc axial 65, qui est agencé radialement à l'intérieur de la paroi 59 de la coupelle 56, et qui est destiné à coopérer avec une échancrure complémentaire 67, agencée radialement sur la collerette 44 du corps 16.

Cette liaison est représentée à la figure 14. Le toc 65 est réalisé venu de matière avec le matériau plastique de la coupelle 56. La coupelle 56 est rappelée élastiquement par une rondelle 48 appropriée, qui comporte un évidement 63 permettant le passage du toc 65 au travers de la rondelle 48. Une telle rondelle est représentée plus particulièrement à la figure 9.

La réalisation du toc 65 n'est pas limitative de l'invention, et une telle liaison en rotation pourrait, de façon non limitative de l'invention, être associée au premier mode de réalisation de la coupelle 56, le toc étant alors formé d'un repli axial (non représenté) de la tôle de la face avant 58 de la coupelle 56.

Par ailleurs, comme l'illustre la figure 14, la coupelle 56 en matériau plastique est avantageusement légèrement déformable, et, au montage, se déforme axialement en appui contre le support 22 pour que la périphérie de sa face arrière 58 soit au contact du support 22 et assure ainsi une étanchéité entre des zones A et B du véhicule qui sont délimitées par l'élément 14 de structure de caisse du véhicule, c'est à dire ici le support 22. De plus, le bourrelet 61 est radialement élastique, de sorte que lorsque la coupelle 56 est en appui par l'intermédiaire de sa face arrière 58 sur le support 22, le montage élastique du bourrelet 61 sur la collerette 44 participe aussi à l'étanchéité entre les zones A et B du véhicule.

Les figures 9 à 12 illustrent diverses variantes de rondelles 48 pour la réalisation des moyens élastiques axiaux selon l'invention.

La figure 9 illustre une rondelle 48 ondulée, aussi appelée rondelle "Onduflex". La rondelle 48 représentée est associée au second mode de liaison en rotation de la coupelle 56 au corps 16, puisqu'elle comporte l'évidement 63 destiné à permettre le passage du toc 65 précédemment décrit en référence aux figures 13 et 14. Toutefois, de façon non limitative de l'invention, une telle rondelle 48 pourrait être associée au premier mode de liaison en rotation de la coupelle 56 au corps 16. Dans ce cas (non représenté), elle ne comporterait pas d'évidement 63, mais seulement des découpes 52 analogues à celles décrites en référence à la figure 1. Des ondulations axiales 69 de la rondelle 48 lui confèrent son élasticité axiale.

La figure 10 représente une rondelle élastique en fil cambré et fendu pour le premier mode de réalisation de liaison en rotation de la coupelle 56 au corps 16. La rondelle 48 est analogue à une spire d'un ressort hélicoïdal, et est montée sur le corps 16 du cylindre 12 représenté à la figure 1, par écartement de ses branches 71. Avantageusement, une telle rondelle peut aussi être utilisée pour le second mode de réalisation de liaison en rotation de la coupelle 56 au corps 16.

La figure 11 représente une rondelle élastique en matériau élastomère pour le premier mode de réalisation de liaison en rotation de la coupelle 56 au corps 16. La rondelle 48 est réalisée en matériau élastomère et est montée sur le corps 16 en se déformant radialement. Avantageusement, une rondelle de ce type pourrait aussi être utilisée pour le second mode de réalisation de liaison en rotation de la coupelle 56 au corps 16. Dans ce cas, elle comporterait un évidement analogue à l'évidement 63 de la rondelle décrite à la figure 9.

La figure 12 illustre une rondelle élastique fendue pour le premier mode de réalisation de liaison en rotation de la coupelle 56 au corps 16. La rondelle 48 est montée sur le corps 16 du cylindre 12 représenté à la figure 1, par écartement de ses branches 73. Avantageusement, une rondelle 48 de ce type pourrait aussi être utilisée pour le second mode de réalisation de liaison en rotation de la coupelle 56 au corps 16. Dans ce cas, elle comporterait un évidement analogue à l'évidement 63 de la rondelle décrite à la figure 9.

Avantageusement, l'agencement 10 permet d'obtenir une fixation rapide d'un cylindre hydraulique 12 dans le tablier d'un véhicule. Cet agencement 10 est d'autant plus avantageux qu'il ne nécessite pas d'outillage particulier, au contraire des fixations à vis conventionnelles, et qu'il est aisément démontable. En effet, il suffit d'exercer un couple important dans le sens opposé au verrouillage sur le cylindre 12 pour vaincre l'effort antagoniste de réaction des dents 72 et permettre un démontage facile du cylindre 12.

## Revendications

1. Agencement (10) pour la fixation, sur un élément (14) de structure de caisse d'un véhicule automobile, d'un cylindre (12) de commande hydraulique de forme générale axiale tubulaire, notamment de commande d'un embrayage ou de freins du véhicule, du type dans lequel le cylindre (12) de commande est mobile entre une position de montage dans l'élément (14) de structure de caisse du véhicule, et une position de verrouillage par rapport à l'élément (14) de structure de caisse du véhicule dans laquelle il est immobilisé par rapport à l'élément (14) de structure de caisse du véhicule par des moyens d'immobilisation, l'agencement comprenant des moyens d'immobilisation en translation suivant l'axe du cylindre (12) qui comportent, d'avant en arrière, une surface d'appui (46) qui s'étend transversalement à partir d'un corps (16) principal du cylindre (12), des moyens élastiques axiaux (48), une paroi (20) solidaire de l'élément (14) de structure de caisse qui est percée d'un orifice (18), et au moins une oreille (34), qui s'étend transversalement à partir du corps (16) principal, qui, au montage, traverse une découpe (40) complémentaire s'étendant radialement à partir de l'orifice (18), l'oreille (34) permettant l'immobilisation en translation du corps (16) par rapport à la caisse lorsqu'une rotation du corps (16) autour de son axe l'amène de sa position de montage à sa position de verrouillage et réalise le pincement de la paroi (20) entre la surface d'appui (46), les moyens élastiques axiaux (48), et l'oreille (34),
**caractérisé en ce que** l'agencement comprend des moyens d'immobilisation en rotation du corps (16) par rapport à la paroi (20) qui comportent une coupelle (56). liée en rotation au corps (16), interposée entre les moyens élastiques axiaux et la paroi (20), et qui comporte au moins un ergot (68) qui s'étend axialement au travers de l'orifice (18) de la paroi pour venir en butée contre la paroi (20) lorsque le corps (16) est amené en rotation de sa position de montage à sa position de verrouillage, et les moyens d'immobilisation en rotation comportent au moins une dent (72), solidaire en rotation du corps (16), qui s'étend axialement au bord du corps (16) pour mordre la paroi (20) lorsque le corps (16) est amené en rotation de sa position de montage à sa position de verrouillage, et pour immobiliser le corps (16) en position de verrouillage.

2. Agencement (10) selon la revendication 1, **caractérisé en ce que** l'oreille (34), est associée à une découpe (40) complémentaire de l'orifice (18).

3. Agencement (10) selon la revendication 2, **caractérisée en ce que** la coupelle (56) est de forme générale cylindrique, et comporte une paroi transversale arrière (58), qui comporte un orifice circulaire (57) et une découpe (60), identique à celle du corps (16), pour permettre son montage sur le corps (16).

4. Agencement (10) selon la revendication 3, **caractérisé en ce que** la coupelle (56) comporte une arête rectiligne (64) qui est agencée tangentiellement au bord de son orifice circulaire (57), et qui est destinée à coopérer avec un méplat (66) complémentaire, agencé sur la périphérie du corps (16), pour lier en rotation la coupelle (56) au corps (16).

5. Agencement (10) selon la revendication 3, **caractérisé en ce que** l'ergot (68) est agencé sur une face arrière de la paroi transversale arrière (58) de la coupelle (56), au bord d'une arête (70) sensiblement radiale de la découpe (60).

6. Agencement (10) selon la revendication 1, **caractérisé en ce que** la coupelle (56) est réalisée par moulage d'un matériau plastique.

7. Agencement (10) selon la revendication 1, **caractérisé en ce que** la coupelle (56) est réalisée par emboutissage d'une tôle.

8. Agencement (10) selon la revendication 7, **caractérisé en ce que** l'ergot (68) est formé d'un repli axial de la tôle de la coupelle (56), et est orienté vers l'arrière.

9. Agencement (10) selon la revendication 1, **caractérisé en ce que** la dent (72) s'étend à partir d'une face avant de l'oreille (34) du corps (16).

10. Agencement (10) selon la revendication 7, **caractérisé en ce que** la dent (72) est portée par la face arrière de la paroi transversale arrière (58) de la coupelle (56).

11. Agencement (10) selon la revendication 10 , **caractérisé en ce que** la dent (72) est formée d'un repli axial de la tôle de la coupelle (56), qui est agencé au bord de la découpe (60), et qui est orienté vers l'arrière.

12. Agencement (10) selon la revendication 1, **caractérisé en ce que** la surface d'appui (46) du corps (16) fait partie d'une collerette (44) annulaire radiale.

13. Agencement (10) selon la revendication 12, **caractérisé en ce que** les moyens élastiques comportent une rondelle élastique (48) qui prend appui sur une face arrière (46) de la collerette (44) et sur une face intérieure avant (54) de la coupelle (56).

14. Agencement (10) selon la revendication 13, **caractérisé en ce que** la coupelle (56) est susceptible de coulisser sur le corps (16) entre deux positions extrêmes, une première position avant dans laquelle la face intérieure avant (54) de la coupelle (56) est sollicitée par la rondelle élastique (48), et une seconde position de butée arrière dans laquelle un bourrelet radial (61), qui est porté par une paroi intérieure (59) de la coupelle (56) s'étend en direction de l'axe du cylindre (12) pour immobiliser la coupelle (56) en emboîtement sur la collerette (44).

15. Agencement (10) selon la revendication 1, **caractérisé en ce que** la paroi (20) est portée par un support (22) qui est agencé en regard d'une ouverture pratiquée dans l'élément (14) de structure de caisse, et comporte deux pattes (28) percées à leurs extrémités, qui permettent le montage du support (22) sur l'élément de structure de caisse (14) par vissage.

16. Agencement (10) selon la revendication 1, **caractérisé en ce que** le corps (16) comporte sur sa périphérie au moins deux oreilles (34) de formes différentes et uniformément réparties, qui sont associées à au moins deux découpes (40) complémentaires de l'orifice (18), pour permettre une indexation angulaire du corps (16) lors de son introduction dans l'orifice (18).

17. Agencement (10) selon la revendication 4, **caractérisée en ce que** l'arête rectiligne (64) relie entre elles deux découpes (60) consécutives dans leur zone de jonction avec l'orifice (57).

## Patentansprüche

1. Anordnung (10) für die an einem Strukturelement (14) einer Kraftfahrzeugkarosserie vorgenommene Befestigung eines hydraulischen Betätigungszylinders (12) mit einer rohrförmigen axialen Gesamtform, insbesondere zur Betätigung einer Kupplung oder von Bremsen des Fahrzeugs, wobei der Betätigungszylinder (12) beweglich zwischen einer Einbauposition im Strukturelement (14) der Fahrzeugkarosserie und einer Position zur Verriegelung im Verhältnis zum Strukturelement (14) der Fahrzeugkarosserie gelagert ist, in der er im Verhältnis zum Strukturelement (14) der Fahrzeugkarosserie durch Sicherungsmittel gesichert ist, wobei die Anordnung Mittel zur Sicherung gegen eine geradlinige Verschiebung entlang der Achse des Zylinders (12) aufweist, die von vom nach hinten eine Auflagefläche (46), die sich von einem Hauptkörper (16) des Zylinders (12) aus quer erstreckt, axiale elastische Mittel (48), eine fest mit dem Strukturelement (14) der Karosserie verbundene Wand (20), durch die eine Öffnung (18) hindurchgeht, und wenigstens eine Nase (34) umfassen, die sich vom Hauptkörper (16) aus quer erstreckt, die beim Einbau durch einen komplementären Ausschnitt (40) hindurchgeht, der sich von der Öffnung (18) aus radial erstreckt, wobei die Nase (34) die Verschiebungssicherung des Körpers (16) im Verhältnis zur Karosserie ermöglicht, wenn eine Drehung des Körpers (16) um seine Achse ihn von seiner Einbauposition zu seiner Verriegelungsposition bringt und das Einklemmen der Wand (20) zwischen der Auflagefläche (46), den axialen elastischen Mitteln (48) und der Nase (34) herbeiführt, **dadurch gekennzeichnet, dass** die Anordnung Mittel zur Drehsicherung des Körpers (16) im Verhältnis zur Wand (20) enthält, die eine drehfest mit dem Körper (16) verbundene Manschette (56) umfassen, die zwischen den axialen elastischen Mitteln und der Wand (20) eingefügt ist und die wenigstens einen Nocken (68) umfasst, der sich axial durch die Öffnung (18) der Wand hindurch erstreckt, um an der Wand (20) zum Anschlag zu kommen, wenn der Körper (16) aus seiner Einbauposition drehend zu seiner Verriegelungsposition gebracht wird, und dass die Mittel zur Drehsicherung wenigstens einen drehfest mit dem Körper (16) verbundenen Zahn (72) umfassen, der sich axial am Rand des Körpers (16) erstreckt, um in die Wand (20) einzudringen, wenn der Körper (16) von seiner Einbauposition drehend zu seiner Verriegelungsposition gebracht wird, und um den Körper (16) in der Verriegelungsposition zu sichern.

2. Anordnung (10) nach Anspruch 1, **dadurch gekennzeichnet, dass** die Nase (34) einem komplementären Ausschnitt (40) der Öffnung (18) zugeordnet ist.

3. Anordnung (10) nach Anspruch 2, **dadurch gekennzeichnet, dass** die Manschette (56) eine allgemein zylindrische Form aufweist und eine hintere Querwand (58) umfasst, die eine kreisförmige Öffnung (57) und einen Ausschnitt (60), identisch wie derjenige des Körpers (16), enthält, um seine Anbringung am Körper (16) zu ermöglichen.

4. Anordnung (10) nach Anspruch 3, **dadurch gekennzeichnet, dass** die Manschette (56) eine geradlinige Kante (64) umfasst, die tangential zum Rand ihrer kreisförmigen Öffnung (57) angeordnet und dazu bestimmt ist, mit einer formschlüssigen Abflachung (66) zusammenzuwirken, die am Umfang des Körpers (16) angeordnet ist, um die Manschette (56) drehfest mit dem Körper (16) zu verbinden.

5. Anordnung (10) nach Anspruch 3, **dadurch gekennzeichnet, dass** der Nocken (68) auf einer Rückseite der hinteren Querwand (58) der Manschette (56), am Rand einer in etwa radialen Kante (70) des Ausschnitts (60), angeordnet ist.

6. Anordnung (10) nach Anspruch 1, **dadurch gekennzeichnet, dass** die Manschette (56) als Formteil aus Kunststoff ausgeführt ist.

7. Anordnung (10) nach Anspruch 1, **dadurch gekennzeichnet, dass** die Manschette (56) durch Tiefziehen eines Blechs ausgeführt ist.

8. Anordnung (10) nach Anspruch 7, **dadurch gekennzeichnet, dass** der Nocken (68) durch eine axiale Umbiegung des Blechs der Manschette (56) gebildet und nach hinten ausgerichtet ist.

9. Anordnung (10) nach Anspruch 1, **dadurch gekennzeichnet, dass** sich der Zahn (72) von einer Vorderseite der Nase (34) des Körpers (16) aus erstreckt.

10. Anordnung (10) nach Anspruch 7, **dadurch gekennzeichnet, dass** der Zahn (72) an der Rückseite der hinteren Querwand (58) der Manschette (56) angebracht ist.

11. Anordnung (10) nach Anspruch 10, **dadurch gekennzeichnet, dass** der Zahn (72) durch eine axiale Umbiegung des Blechs der Manschette (56) gebildet ist, die am Rand des Ausschnitts (60) angeordnet und nach hinten gerichtet ist.

12. Anordnung (10) nach Anspruch 1, **dadurch gekennzeichnet, dass** die Auflagefläche (46) des Körpers (16) zu einem radialen ringförmigen Kragen (44) gehört.

13. Anordnung (10) nach Anspruch 12, **dadurch gekennzeichnet, dass** die elastischen Mittel eine Federscheibe (48) umfassen, die auf einer rückseitigen Fläche (46) des Kragens (44) und auf einer vorderen Innenfläche (54) der Manschette (56) zur Anlage kommt.

14. Anordnung (10) nach Anspruch 13, **dadurch gekennzeichnet, dass** die Manschette (56) sich auf dem Körper (16) zwischen zwei Endpositionen verschieben kann, einer ersten vorderen Position, in der die vordere Innenfläche (54) der Manschette (56) durch die Federscheibe (48) beaufschlagt wird, und einer zweiten hinteren Anschlagposition, in der sich ein radialer Wulst (61), der an einer Innenwand (59) der Manschette (56) angebracht ist, in Richtung der Achse des Zylinders (12) erstreckt, um die Manschette (56) auf dem Kragen (44) eingeschoben zu sichern.

15. Anordnung (10) nach Anspruch 1, **dadurch gekennzeichnet, dass** die Wand (20) an einem Träger (22) angebracht ist, der gegenüber einer in das Strukturelement (14) der Karosserie eingearbeiteten Öffnung angeordnet ist, und zwei an ihren Enden durchbrochene Ansätze (28) umfasst, die den Einbau des Trägers (22) an dem Strukturelement (14) der Karosserie durch Verschrauben ermöglichen.

16. Anordnung (10) nach Anspruch 1, **dadurch gekennzeichnet, dass** der Körper (16) an seinem Umfang wenigstens zwei gleichmäßig verteilte Nasen (34) mit unterschiedlichen Formen umfasst, die wenigstens zwei formschlüssigen Ausschnitten (40) der Öffnung (18) zugeordnet sind, um eine Winkelvorpositionierung des Körpers (16) bei seiner Einführung in die Öffnung (18) zu ermöglichen.

17. Anordnung (10) nach Anspruch 4, **dadurch gekennzeichnet, dass** die geradlinige Kante (64) zwei aufeinanderfolgende Ausschnitte (60) in ihrem Anschlussbereich an die Öffnung (57) miteinander verbindet.

## Claims

1. Arrangement (10) for fixing, to a motor vehicle bodywork structural element (14), a hydraulically controlled cylinder (12) with a tubular axial shape overall, in particular for controlling the clutch or brakes of the vehicle, of the type in which the control cylinder (12) is able to move between a position of mounting in the vehicle bodywork structural element (14) and a position of locking with respect to the vehicle bodywork structural element (14) in which it is immobilised with respect to the vehicle bodywork structural element (14) by immobilisation means, the arrangement comprising means of immobilising in translation along the axis of the cylinder (12) which comprise, from front to rear, a support surface (46) which extends transversely from a main body (16) of the cylinder (12), axial elastic means (48), a wall (20) fixed to the bodywork structural element (14) which has an orifice (18) in it, and at least one lug (34) which extends transversely from the main body (16), which, on mounting, passes through a complementary cutout (40) extending radially from the orifice (18), the lug (34) permitting the translational immobilisation of the body (16) with respect to the bodywork when a rotation of the body (16) about its axis brings it from its mounting position to its locking position and effects the gripping of the wall (20) between the support surface (46), the axial elastic means (48) and the lug (34),
**characterised in that** the arrangement comprises means of immobilising the body (16) in rotation with respect to the wall (20) which comprise a dish (56) rotationally connected to the body (16), interposed between the axial elastic means and the wall (20) and which comprises at least one toe (68) which extends axially through the orifice (18) in the wall in order to come into abutment against the wall (20) when the body (16) is brought in rotation from its mounting position to its locking position, and the means of immobilisation in rotation comprise at least one tooth (72), rotationally fixed to the body (16), which extends axially to the edge of the body (16) in order to bite into the wall (20) when the body (16) is brought in rotation from its mounting position to its locking position, and to immobilise the body (16) in the locking position.

2. Arrangement (10) according to Claim 1, **characterised in that** the lug (34) is associated with a complementary cutout (40) in the orifice (18).

3. Arrangement (10) according to Claim 2, **characterised in that** the dish (56) is cylindrical in shape overall and comprises a rear transverse wall (58), which comprises a circular orifice (57) and a cutout (60) identical to that in the body (16) to enable it to be mounted on the body (16).

4. Arrangement (10) according to Claim 3, **characterised in that** the dish (56) comprises a rectilinear edge (64) which is arranged tangentially to the edge of its circular orifice (57) and which is intended to cooperate with a complementary flat (66) arranged on the periphery of the body (16) in order to rotationally connect the dish (56) to the body (16).

5. Arrangement (10) according to Claim 3, **characterised in that** the toe (68) is arranged on a rear face of the rear transverse wall (58) of the dish (56), at the edge of a substantially radial edge (70) of the cutout (60).

6. Arrangement (10) according to Claim 1, **characterised in that** the dish (56) is produced by moulding in a plastics material.

7. Arrangement (10) according to Claim 1, **characterised in that** the dish (56) is produced by deep drawing a metal sheet.

8. Arrangement (10) according to Claim 7, **characterised in that** the toe (68) is formed by an axial fold in the sheet metal of the dish (56) and is oriented towards the rear.

9. Arrangement (10) according to Claim 1, **characterised in that** the tooth (72) extends from a front face of the lug (34) on the body (16).

10. Arrangement (10) according to Claim 7, **characterised in that** the tooth (72) is carried by the rear face of the rear transverse wall (58) of the dish (56).

11. Arrangement (10) according to Claim 10, **characterised in that** the tooth (72) is formed by an axial fold in the sheet metal of the dish (56), which is arranged at the edge of the cutout (60) and which is oriented towards the rear.

12. Arrangement (10) according to Claim 1, **characterised in that** the support surface (46) of the body (16) forms part of a radial annular collar (44).

13. Arrangement (10) according to Claim 12, **characterised in that** the elastic means comprise an elastic washer (48) which bears on a rear face (46) of the collar (44) and on a front internal face (54) of the dish (56).

14. Arrangement (10) according to Claim 13, **characterised in that** the dish (56) is able to slide on the body (16) between two extreme positions, a first front position in which the front internal face (54) of the dish (56) is acted on by the elastic washer (48), and a second rear stop position in which a radial rim (61), which is carried by an internal wall (59) of the dish (56), extends in the direction of the axis of the cylinder (12) in order to immobilise the dish (56) whilst fitting on the collar (44).

15. Arrangement (10) according to Claim 1, **characterised in that** the wall (20) is carried by a support (22) which is arranged opposite an opening formed in the bodywork structural element (14), and comprises two tabs (28) with holes at their ends, which enable the support (22) to be mounted on the bodywork structural element (14) by screwing.

16. Arrangement (10) according to Claim 1, **characterised in that** the body (16) has on its periphery at least two lugs (34) with different shapes and uniformly distributed, which are associated with at least two complementary cutouts (40) in the orifice (18) to allow angular location of the body (16) when it is inserted in the orifice (18).

17. Arrangement (10) according to Claim 9, **characterised in that** the rectilinear edge (64) connects together two consecutive cutouts (60) in their area of joining with the orifice (57).
